# EUROPÄISCHE PATENTSCHRIFT

(11) **EP 3 571 008 B1**
(45) Veröffentlichungstag und Bekanntmachung des Hinweises auf die Patenterteilung: **29.12.2021**
(21) Anmeldenummer: 18702421.1
(22) Anmeldetag: 16.01.2018
(51) Int. Cl.: B23Q 11/08, B23Q 17/00, F16P 3/00, G05B 19/00

(54) **VERFAHREN UND VORRICHTUNG ZUR BESTIMMUNG UND/ODER ÜBERWACHUNG DES ZUSTANDES EINER SCHUTZABDECKUNG**
METHOD AND DEVICE FOR DETERMINING AND/OR MONITORING THE STATE OF A PROTECTIVE COVER
PROCÉDÉ ET DISPOSITIF PERMETTANT DE DÉTERMINER ET/OU DE SURVEILLER L'ÉTAT D'UN CAPOT DE PROTECTION

(30) Priorität: 20.01.2017 DE 102017101079
(43) Veröffentlichungstag der Anmeldung: 27.11.2019
(73) Patentinhaber: Arno Arnold GmbH, 63179 Obertshausen (DE)
(72) Erfinder: KREUTZER, Thomas, 64291 Darmstadt (DE); MANG, Wolf-Matthias, 63179 Obertshausen (DE)
(74) Vertreter: advotec.
(86) Internationale Anmeldenummer: PCT/EP2018/050933
(87) Internationale Veröffentlichungsnummer: WO 2018/134176

(56) Entgegenhaltungen:
- EP-A1- 0 495 259
- DE-A1- 10 024 316
- DE-A1-102010 011 475
- DE-A1-102016 121 711
- DE-B3-102013 008 645
- US-A1- 2014 150 533

## Beschreibung

Die Erfindung betrifft ein Verfahren und eine Vorrichtung zur Bestimmung und/oder Überwachung des Zustandes einer Schutzabdeckung.

Schutzabdeckungen sind bereits aus dem Stand der Technik bekannt und dienen insbesondere, jedoch keineswegs ausschließlich, der Abdeckung von beweglichen Maschinenteilen oder dergleichen. In der US 2014/150533 A1 wird ein Verfahren und eine Vorrichtung zur Bestimmung und/oder Überwachung des Zustandes einer als Schiebetür mit einem Fenster ausgebildeten Schutzabdeckung offenbart, wobei eine charakteristische Eigenschaft (Druckkraft oder Druckbelastung) der Schutzabdeckung erfasst wird. Derartige Schutzabdeckungen weisen typischerweise in der Länge veränderliche Elemente auf, um auf diese Weise die Maschinenteile sowohl im ein- als auch im ausgefahrenen Zustand abzudecken. Somit werden die Maschinenteile nicht nur vor Fremdeinflüssen, wie beispielsweise Spänen, Staubpartikeln oder sonstigen Verschmutzungen geschützt, sondern können zudem auch gegenüber der Umgebung abgedichtet werden. Beispielsweise sind die DE 10 2006 033 607 B4 und die DE 20 2012 008 987 U1 zu nennen. Typischerweise sind die in der Länge veränderlichen Elemente der Schutzabdeckung mit einem Stützrahmen verbunden, welcher der Stabilisierung dieser, insbesondere deren Abstützung, dient. Ein Stützrahmen umfasst wiederum mehrere Rahmenelemente, welche in gleichmäßigem Abstand zueinander über die Länge der Elemente der Schutzabdeckung verteilt sind und welche ebenfalls mit den Elementen verbunden sein können. Die Verbindung der Stützrahmen und/oder der Rahmenelemente mit den Elementen der Schutzabdeckung dient der Gewährleistung der Funktionalität und/oder der Schutzfunktion der Schutzabdeckung.

Zur Erhaltung der Funktionalität und/oder der Schutzfunktion der Schutzabdeckung ist es wichtig, den Zustand der Schutzabdeckung, beispielsweise im Hinblick auf Abnutzungserscheinung und/oder ein fortschreitendes Alter dieser, welche typischerweise mit einem Verlust der Funktionalität, einem teilweisen oder vollständigen Ausfall und/oder der Schutzfunktion einhergeht, zu überwachen. Bei den aus dem Stand der Technik bekannten Schutzabdeckungen ist eine derartige Überwachung allerdings noch nicht erkannt worden, so dass es im Falle des Verlustes der Funktionalität und/oder der Schutzfunktion der Schutzabdeckung zu einer unplanmäßigen Reparatur und/oder Wartung dieser, sowie einem Stillstand der Maschine kommt. Ein noch viel größeres Problem stellt der teilweise oder vollständige Ausfall der Schutzabdeckung bzw. eines Elementes der Schutzabdeckung dar. Es ist des Weiteren problematisch, dass es bei einem Verschleiß der Schutzabdeckung, insbesondere einem schleichenden Verschleiß dieser, beispielsweise der Führung und/oder des Antriebs, zu einer teils drastischen Verschlechterung der Genauigkeit des Bearbeitungsprozesses kommt. Nachteilig dabei ist es, dass der Zeitpunkt nicht vorhersagbar und/oder planbar ist. So ist es beispielsweise erforderlich, die gesamte Schutzabdeckung auszutauschen, anstelle rechtzeitig und kostengünstig lediglich die von einer Reparatur und/oder Wartung betroffenen Elemente instand zu setzen. Verständlicherweise erweist sich somit im Vergleich eine Wartung bzw. ein vollständiger Austausch als sehr kostspielig und arbeitszeitaufwendig.

Es besteht daher ein großer Bedarf an einem Verfahren und einer Vorrichtung zur Bestimmung und/oder Überwachung des Zustandes einer Schutzabdeckung, mittels welchen eine schnelle, zuverlässige und präzise Bestimmung und/oder Überwachung einer Änderung der charakteristischen physikalischen, mechanischen und/oder chemischen Eigenschaft der Schutzabdeckung gewährleistet ist, um rechtzeitig einen teilweisen oder vollständigen Austausch der Schutzabdeckung vorherzusagen. Zudem sollte das Verfahren und die Vorrichtung kostengünstig realisierbar, zuverlässig arbeitend und individuell an die zu überwachende Schutzabdeckung anpassbar sein. Die Erfindung hat sich daher die Aufgabe gestellt, ein Verfahren und eine Vorrichtung zur Bestimmung und/oder Überwachung des Zustandes einer Schutzabdeckung bereitzustellen, um die oben genannten Schwierigkeiten zu überwinden und um vor allen die wartungs- und/oder reparaturbedingten Arbeiten optimal zu planen, um dadurch die Stillstandzeiten der Maschine und die dadurch entstehenden Kosten auf ein Minimum zu reduzieren.

Diese Aufgabe wird auf überraschend einfache aber wirkungsvolle Weise durch ein Verfahren zur Bestimmung und/oder Überwachung des Zustandes einer Schutzabdeckung, sowie einer entsprechenden Vorrichtung, nach der Lehre der unabhängigen Hauptansprüche gelöst.

Erfindungsgemäß ist ein Verfahren zur Bestimmung und/oder Überwachung des Zustandes einer Schutzabdeckung nach Anspruch 1 vorgeschlagen.

Das erfindungsgemäße Verfahren beruht auf dem Grundgedanken, dass es zur Bestimmung und/oder Überwachung des Zustandes einer Schutzabdeckung ausreichend ist, mindestens zwei Zustandswerte mindestens zweier charakteristischer physikalischer, mechanischer und/oder chemischer Eigenschaften dieser Schutzabdeckung zu erfassen, insbesondere zu zwei zeitlich nachfolgenden Zeitpunkten, und basierend auf dem Vergleich dieser Zustandswerte den Zustand der Schutzabdeckung hinreichend genau zu bestimmen und/oder zu überwachen.

Im Rahmen der Erfindung ist es dabei erkannt worden, dass es zur Bestimmung und/oder Überwachung des Zustandes der Schutzabdeckung ausreichend ist, die Veränderung mindestens zweier charakteristischer Eigenschaften der Schutzabdeckung über die Nutzungsdauer zu erfassen, wobei es unerheblich ist, ob es sich dabei um eine physikalische, mechanische und/oder chemische Eigenschaft dieser handelt. Es ist lediglich relevant, dass zwei Zustandswerte derselben charakteristischen Eigenschaft zu zwei zeitlich aufeinanderfolgenden Zeitpunkten erfasst und miteinander verglichen werden, wobei aus dem Vergleich der Zustandswerte die Bestimmung und/oder Überwachung des Zustandes der Schutzabdeckung erfolgt. Bevorzugt wird dabei die Veränderung einer charakteristischen Eigenschaft der Schutzabdeckung erfasst, noch mehr bevorzugt die Veränderung von 3, 4, 5, 6, 7, 8, 9, 10, 11, 12, 13, 14, 15, 16, 17, 18, 19, 20 oder mehr charakteristischen Eigenschaften der Schutzabdeckung. Eine Veränderung der charakteristischen Eigenschaft kann bevorzugt eine Verbesserung und/oder eine Verschlechterung dieser sein. Der Begriff "charakteristische Eigenschaft" betrifft dabei eine für das verwendete Material, den Verwendungszweck, den Einsatzort und/oder die Einsatzbedingungen der Schutzabdeckung wesentliche Eigenschaft, mittels welcher ein direkter oder indirekter Rückschluss auf den Zustand der Schutzabdeckung möglich ist. Beispielsweise ist die Dichtigkeit einer Schutzabdeckung wesentlich bei einer staub- und/oder feuchtigkeitsdichten Schutzabdeckung. Dabei ist es wichtig, dass die charakteristische Eigenschaft hinreichend genau untersucht, bekannt und/oder definiert ist, insbesondere deren Veränderung über die Zeit, bevorzugt die Nutzungszeit, die Standzeit und/oder die Stillstandzeit. Das heißt, dass der funktionelle Zusammenhang der charakteristischen Eigenschaft zwischen der Veränderung und der Zeit bekannt und/oder definiert ist. Der funktionelle Zusammenhang ist dabei beispielsweise, jedoch keinesfalls ausschließlich, in einer Funktion als Trend mit einem Zustandswerteverlauf über die Zeit darstellbar, beispielsweise in einer linearen Funktion, in einer logarithmischen Funktion, in einer exponentiellen Funktion, in einer logistischen Funktion, in einer polygonen Funktion und/oder in einer Mischung daraus.

Im Rahmen der Erfindung ist es dabei als wesentlich erkannt worden, dass der erste und der zweite Zustandswert derselben charakteristischen Eigenschaft bzw. derselben charakteristischen Eigenschaften erfasst werden. Dabei ist es ebenfalls denkbar, dass die Zustandswerte der zwei charakteristischen Eigenschaften in Kombination mit mindestens einem weiteren Wert für einen Faktor erfasst werden, welcher in Bezug zu dem verwendeten Material, dem Verwendungszweck, dem Einsatzort und/oder den Einsatzbedingungen der Schutzabdeckung steht. Noch mehr bevorzugt mit Werten für 3, 4, 5, 6, 7, 8, 9, 10, 11, 12, 13, 14, 15, 16, 17, 18, 19, 20 oder mehr Faktoren. Dies liegt darin begründet, dass eine charakteristische Eigenschaft von verschiedenen Faktoren abhängig und/oder beeinflussbar ist, deren zusätzliche Erfassung zu einer Verbesserung der Bestimmung und/oder Überwachung beiträgt. Beispielsweise sind in diesem Zusammenhang die Temperatur, der Druck und/oder die Feuchtigkeit denkbar, welche sich auf die charakteristischen Eigenschaften der Schutzabdeckung auswirken können.

Der Begriff "Verfahren zur Bestimmung und/oder Überwachung des Zustand einer Schutzabdeckung" betrifft ein Verfahren zur Ermittlung der Veränderung, bevorzugt eine Verbesserung und/oder eine Verschlechterung, der charakteristischen physikalischen, mechanischen und/oder chemischen Eigenschaft der Schutzabdeckung über die Zeit, bevorzugt die Nutzungszeit, die Standzeit und/oder die Stillstandzeit, mittels welchem eine Aussage über eine Beschädigung, eine Wartung, einen Ausfall, eine Reparatur, das Alter, den Verschleiß und/oder die restliche Nutzungsdauer der Schutzabdeckung getroffen werden kann. Zudem lässt sich verfolgen, unter welchen Bedingungen und/oder Einflüssen die Alterung der Schutzabdeckung fortschreitet bzw. verlangsamt ist. Überdies lässt sich die Entstehung und/oder Ursache einer Beschädigung aufzeigen, so dass ein bevorstehendes Wartungsintervall bestmöglich geplant und/oder vorhergesagt werden kann. Das erfindungsgemäße Verfahren kann zusätzliche Schritte enthalten, welche nach oder zwischen den explizit aufgeführten essentiellen Schritten a) bis d) liegen. Bevorzugt ist das Verfahren automatisierbar.

Der Begriff "Schutzabdeckung" betrifft insbesondere, jedoch keineswegs ausschließlich, eine Abdeckung von beweglichen Maschinenteilen oder dergleichen. Im Rahmen der Erfindung bezeichnet der Begriff dabei die gesamte Schutzabdeckung, einen Bereich dieser und/oder mindestens ein Element dieser.

Der Begriff "Bestimmung des Zustandes" der Schutzabdeckung betrifft die Ermittlung des Zustandes basierend auf der Erfassung der mindestens einen charakteristischen physikalischen, mechanischen und/oder chemischen Eigenschaft der Schutzabdeckung, welche bevorzugt mittels eines geeigneten Mittels erfolgt. Die Bestimmung erfolgt bevorzugt semiquantitativ, quantitativ, direkt und/oder indirekt. Eine direkte Bestimmung betrifft beispielsweise die Erfassung des Zustandes der charakteristischen Eigenschaft der Schutzabdeckung basierend auf einem Signal und/oder Wert, welcher direkt von der Schutzabdeckung abgeleitet wird.

Ein derartiges Signal und/oder ein derartiger Wert kann auf verschiedene Weisen erhalten werden, beispielsweise durch Erfassen mindestens einer physikalischen, mechanischen und/oder chemischen Eigenschaft der Schutzabdeckung mit aus dem Stand der Technik bekannten Mitteln. Die indirekte Bestimmung betrifft beispielsweise die Erfassung eines Signals und/oder Wertes der charakteristischen Eigenschaft der Schutzabdeckung, welche über eine zusätzliche bzw. sekundäre Komponente erhalten wird.

Der Begriff "Überwachung des Zustandes" betrifft die Verfolgung und/oder die Vorhersage des ermittelten Zustandes der mindestens einen charakteristischen physikalischen, mechanischen und/oder chemischen Eigenschaft der Schutzabdeckung. Die Überwachung ist beispielsweise, jedoch keinesfalls ausschließlich nummerisch und/oder graphisch darstellbar. Zur Erhöhung der Genauigkeit der Überwachung erfolgt diese dabei bevorzugt zu mehreren Zeitpunkten und/oder permanent. Der Vorteil einer länger dauernden Überwachung liegt darin, dass es auch besser möglich ist, eine Vorhersage des Zustandes der Schutzabdeckung zu treffen.

Es ist einem Fachmann verständlich, dass eine Bestimmung und/oder eine Überwachung in der Regel nicht zu 100 Prozent korrekt sein kann. Der Begriff betrifft daher eine statistisch signifikante Wahrscheinlichkeit, was die Genauigkeit der Ermittlung des Zustandes bzw. der Verfolgung und/oder Vorhersage des ermittelten Zustandes betrifft. Ob eine derartige Bestimmung und/oder Überwachung statistisch signifikant ist, kann ohne erfinderisch tätig zu werden von einem Fachmann mittels in der Fachwelt bekannter Verfahren bestimmt werden. Beispielsweise sind statistische Evaluierungstools zu nennen, wie beispielsweise die Bestimmung des Konfidenzintervalls, des p-Wertes, des Student's-t-Tests, der Mann-Whitney-Bestimmung usw.. Die entsprechenden Intervalle sind mindestens 90 %, mindestens 95 %, mindestens 97 %, mindestens 98 % oder mindestens 99 % korrekt. Die p-Werte sind bevorzugt 0,1, 0,05, 0,01, 0,005 oder 0,0001. Bevorzugt ist die Bestimmung des Zustandes der Schutzabdeckung und/oder die Überwachung des ermittelten Zustandes im Rahmen der vorliegenden Erfindung mindestens 60 %, mindestens 70 %, mindestens 80 %, mindestens 90 % oder mindestens 95 % oder mindestens 99 % korrekt.

Der Begriff "Vergleichen" betrifft den Vergleich der Zustandswerte miteinander, insbesondere des ersten und des zweiten Zustandswertes der mindestens einen charakteristischen physikalischen, mechanischen und/oder chemischen Eigenschaft der Schutzabdeckung. Dabei versteht es sich, dass ein Vergleich, wie er hier angewendet wird, sich auf einen Vergleich entsprechender Parameter und/oder Werte bezieht. So ist es beispielsweise denkbar, dass ein absoluter erster Zustandswert mit einem absoluten zweiten Zustandswert vergleichbar ist, wobei ein relativer Wert des ersten Zustandswertes mit einem relativen Wert des zweiten Zustandswertes vergleichbar ist. Des Weiteren ist es denkbar, dass ein Intensitätssignal des ersten Zustandswertes mit einem Intensitätssignal des zweiten Zustandswertes vergleichbar ist.

Im Rahmen der Erfindung kann der Vergleich manuell und/oder computerunterstützt durchgeführt werden. Für einen computergestützten Vergleich, beispielsweise der in den Schritten a) und b) erfassten Zustandswerte sind alle einem Fachmann bekannten Mittel denkbar, wie beispielsweise ein Computer und/oder ein Computerprogramm. Ein Computerprogramm kann zusätzlich das Ergebnis des Vergleichs evaluieren, beispielsweise automatisch eine Beurteilung der erfassten Zustandswerte liefern. Dabei ist mittels des in Schritt c) durchgeführten Vergleichs eine Ermittlung des Zustandes der Schutzabdeckung möglich. Es ist weiterhin beispielsweise denkbar, dass die Schritte c) und d) von einer Auswerte-, einer Analyse- und/oder einer Evaluierungseinheit unterstützt sind. Bevorzugt ist der Zeitpunkt der Erfassung des Zustandswertes der charakteristischen Eigenschaft der Schutzabdeckung in dem Vergleich mit berücksichtigt, so dass basierend auf dem Vergleich eine Vorhersage getroffen werden kann, wie sich der Zustand in zeitlicher Abhängigkeit verändert.

Im Rahmen der Erfindung ist es des Weiteren bevorzugt, dass der erste und der zweite Zustandswert derselben charakteristischen Eigenschaft bzw. derselben charakteristischen Eigenschaften zwischen mehreren Schutzabdeckungen, d.h. zwischen 2, 3, 4, 5, 6, 7, 8, 9, 10, 11, 12, 13, 14, 15, 16, 17, 18, 19, 20 oder mehr Schutzabdeckungen, verglichen wird. Es ist dabei verständlich, dass vordergründig die Bestimmung und/oder Überwachung des Zustandes jeder einzelnen Schutzabdeckung erfolgt, um basierend auf dieser mehrere Schutzabdeckungen entsprechend miteinander zu vergleichen. Dies bietet den Vorteil, dass die Bestimmung und/oder Überwachung des Zustandes der Schutzabdeckung nicht nur in zeitlicher Abhängigkeit erfolgt, d.h. eine zeitliche Veränderung des ersten und des zweiten Zustandswertes derselben charakteristischen Eigenschaft bzw. derselben charakteristischen Eigenschaften derselben Schutzabdeckung, sondern zudem die Bestimmung und/oder Überwachung des Zustandes der Schutzabdeckung in räumlicher Abhängigkeit erfolgt, d.h. eine Veränderung des ersten und des zweiten Zustandswertes derselben charakteristischen Eigenschaft bzw. derselben charakteristischen Eigenschaften zwischen unterschiedlichen Schutzabdeckungen. Das bedeutet mit anderen Worten, dass der Vergleich der Zustandswerte der entsprechenden Eigenschaft bzw. Eigenschaften räumlich neben-, unter- und/oder übereinander angeordneter bzw. räumlich getrennt voneinander angeordneter Schutzabdeckungen umfasst ist. Der Begriff "räumlich" betrifft dabei, wie einem Fachmann verständlich ist, einerseits den Vergleich von unmittelbar neben-, unter- und/oder übereinander angeordneten Schutzabdeckungen, sowie andererseits von Schutzabdeckungen, welche voneinander in beliebigem Abstand getrennt angeordnet sind. Das bedeutet beispielsweise, jedoch keineswegs ausschließlich, dass die Schutzabdeckungen innerhalb ihres Aufstell-und/oder Betriebsortes räumlich voneinander getrennt angeordnet sind. Das bedeutet zudem beispielsweise, jedoch keineswegs ausschließlich, dass Schutzabdeckungen an unterschiedlichen Aufstell- und/oder Betriebsorten angeordnet und auf diese Weise räumlich voneinander getrennt sind. Der Vergleich in räumlicher Abhängigkeit bietet dabei den Vorteil, dass auf diese Weise Rückschlüsse auf die Veränderung des Zustandes der Schutzabdeckungen in Abhängigkeit von den jeweiligen Bedingungen am Aufstell- und/oder Betriebsort geschlossen werden können.

Im Rahmen der Erfindung ist es verständlich, dass das Ergebnis des Vergleichs, das heißt die Ermittlung und/oder Evaluierung des Zustandes der Schutzabdeckung, direkt oder indirekt von der charakteristischen Eigenschaft abhängig ist. Somit ist es denkbar, dass eine geringe und nicht signifikante, eine große und signifikante und/oder keine Veränderung des zweiten Zustandswertes im Vergleich zu dem ersten Zustandswert indikativ für einen bestimmten Zustand ist. Eine Veränderung der charakteristischen Eigenschaft kann bevorzugt eine Verbesserung und/oder eine Verschlechterung dieser sein. In diesem Zusammenhang ist es denkbar, dass das Ergebnis des Vergleichs als zeitliche Angabe, beispielsweise in Jahren, Monaten, Tagen, Stunden und/oder Minuten, einem absoluten Wert und/oder einem relativen Wert ausgebbar ist.

In diesem Zusammenhang ist es weiterhin denkbar, dass das Ergebnis des Vergleichs eine Erweiterung der zeitlichen Angabe jeder einzelnen Schutzabdeckung ist, auf diese Weise beispielsweise Rückschlüsse auf die Veränderung der charakteristischen Eigenschaft der jeweiligen Schutzabdeckungen in Abhängigkeit von den vorliegenden Bedingungen am Aufstell- und/oder Betriebsort zu ziehen. Dies bietet den Vorteil, dass die die charakteristische Eigenschaft beeinflussende Bedingung bestimmbar und/oder überwachbar ist.

Im Rahmen der Erfindung gilt es zu berücksichtigen, dass alle erfassten und/oder ermittelten Werte, sowie ein Ergebnis der Bestimmung und/oder Überwachung maßgeblich von dem verwendeten Material, dem Verwendungszweck, dem Einsatzort und/oder den Einsatzbedingungen abhängig sind. Dies ist einem Fachmann bekannt.

Mittels des erfindungsgemäßen Verfahrens ist es somit möglich, den Zustand der Schutzabdeckung einfach und zuverlässig zu bestimmen und/oder zu überwachen, um beispielsweise eine Aussage über den Zustand der Schutzabdeckung geben zu können. Auf diese Weise ist es möglich, die für eine Wartung und/oder Reparatur erforderlichen Stillstandzeiten einer Maschine optimal zu planen, um unnötige Stillstandzeiten und/oder Kosten zu vermeiden. Zudem ist es möglich, lediglich die von einer Wartung und/oder Reparatur betroffenen Elemente der Schutzabdeckung auszutauschen und/oder instand zu setzen, um auf diese Weise in erheblichem Maße Kosten einzusparen.

Vorteilhafte Weiterbildungen der Erfindung, welche einzeln oder in Kombination realisierbar sind, sind in den Unteransprüchen dargestellt.

In einer Weiterbildung der Erfindung ist es denkbar, dass das Verfahren zusätzlich umfasst
e) Darstellen der in Schritt d) durchgeführten Ermittlung.

Mittels dieser Ausgestaltung ist es möglich, den Zustand der Schutzabdeckung nummerisch und/oder graphisch darzustellen, um auf diese Weise eine Vereinfachung des Verständnisses der Ermittlung in Schritt d) zu erreichen. Einem Fachmann sind geeignete Mittel zur Darstellung einer Ausgabe eines Wertes bekannt. So ist es beispielsweise, jedoch keinesfalls ausschließlich, möglich, eine restliche Nutzungsdauer und/oder eine Ausfallwahrscheinlichkeit der Schutzabdeckung darzustellen. Der Schritt e) kann von einer Ausgabeeinheit unterstützt sein.

In einer weiteren Ausgestaltung der Erfindung ist es denkbar, dass nach dem Schritt b) ein zusätzlicher Schritt b1) umfasst ist:
b1) Erfassen eines dritten Zustandswertes der mindestens einen charakteristischen Eigenschaft der Schutzabdeckung zu einem dritten Zeitpunkt, welcher dem zweiten Zeitpunkt zeitlich nachfolgend ist.

Die Erfassung eines dritten Zustandswertes bietet den Vorteil, dass eine bessere Annäherung an den funktionellen Zusammenhang der charakteristischen Eigenschaft und damit eine drastische Verbesserung der Ermittlung in Schritt d) erreichbar ist. Auf diese Weise ist beispielsweise, jedoch keinesfalls ausschließlich, eine bessere Aussage über die Krümmung der Funktion treffbar, wobei gilt, dass die Genauigkeit der Ermittlung in Schritt d) mit zunehmender Anzahl an erfassten Zustandswerten steigt.

Es ist weiterhin denkbar, dass der erste Zustandswert der charakteristischen Eigenschaft ein Referenzwert ist. Der Referenzwert kann dabei insbesondere, jedoch keinesfalls ausschließlich, ein fest eingestellter, ein ermittelter und/oder ein theoretischer Wert, wie ein Laborwert und/oder ein Datenbankeintrag, sein, sowie vor und/oder bei Inbetriebnahme der Schutzabdeckung erfasst werden. Weiterhin ist es denkbar, dass der Referenzwert einen Schwellenwert definiert, welcher bevorzugt als Obergrenze des Normalwertes der charakteristischen physikalischen, mechanischen und/oder chemischen Eigenschaft unter verschiedenen Bedingungen definiert ist. Der Wert der Obergrenze des Normalwertes kann mittels verschiedener und einem Fachmann gut bekannter Techniken bestimmt werden.

In einer weiteren Ausgestaltung der Erfindung ist es denkbar, dass der erste, der zweite und/oder der dritte Zustandswert bei im Wesentlichen ähnlichen Bedingungen erfasst wird. Dies erhöht maßgeblich die Genauigkeit der Bestimmung und/oder Überwachung des Zustands der Schutzabdeckung, insbesondere durch einen teilweisen oder vollständigen Ausschluss von verschiedenen Faktoren, von welchen die charakteristische Eigenschaft abhängig und/oder beeinflussbar ist. Der Begriff "im Wesentlichen ähnlichen" bedeutet, dass es lediglich zu einer geringen, insbesondere nicht signifikanten, Veränderung, Änderung und/oder Abweichung von den Bedingungen während der Zustandswerterfassung kommt.

In noch einer weiteren Ausgestaltung der Erfindung ist es denkbar, dass der erste, der zweite und/oder der dritte Zustandswert bei unterschiedlichen Bedingungen erfasst wird. Die Erfassung der Zustandswerte bei unterschiedlichen Bedingungen, d.h. bei sich unterscheidenden Bedingungen, ermöglicht es, dass die Abhängigkeit und/oder Beeinflussung der charakteristischen Eigenschaft von verschiedenen Faktoren, wie beispielsweise Temperatur, Druck und/oder Feuchte, ermittelt werden kann.

Erfindungsgemäß sind die charakteristischen Eigenschaften die Lichtdurchlässigkeit, die Lichtabsorption, die Lichtreflexion, die Viskosität, die Beschleunigung, die Geschwindigkeit, die Elastizität, die Steifigkeit, die Temperatur, der Feuchtigkeitsgehalt, die elektrische Leitfähigkeit, die Druckkraft, die Druckbelastung, die Zugbelastung, die Vorspannkraft, die Porosität, das Gewicht, die Brüchigkeit, die Dicke und/oder die Dichte.

Es ist weiterhin denkbar, dass der Zustand der Schutzabdeckung ausgewählt ist aus der Liste aus der restlichen Nutzungsdauer, dem Alterungszustand, dem Verschleiß, dem Vorhandensein einer Beschädigung und/oder dem Bevorstehen eines Wartungsintervalls.

Der Begriff "restliche Nutzungsdauer" betrifft die Ermittlung der noch verbleibenden Zeit der Schutzabdeckung, in welcher die Funktionalität und/oder Schutzfunktion dieser besteht. Durch Ermittlung dieses Wertes lässt es sich beispielsweise zudem bestimmen und/oder überwachen, wann die Schutzabdeckung zu warten, zu reparieren und/oder auszutauschen ist. Es lässt sich zudem beispielsweise überwachen, wie sich die Funktionalität und/oder Schutzfunktion der Schutzabdeckung über die Zeit verändert. Die restliche Nutzungsdauer ist bevorzugt in Form einer Zeiteinheit darstellbar, wie beispielsweise in Jahren, Monaten, Tagen, Stunden und/oder Minuten, sowie als ein relativer Wert.

Die Begriffe "Alterungszustand" und "Verschleiß" beschreiben beispielsweise eine Ermittlung des maximalen Alters, der Funktionalität und/oder Schutzfunktion der Schutzabdeckung und/oder der Ausfallwahrscheinlichkeit der Schutzabdeckung. Mittels dieser Werte ist es beispielsweise möglich, Rückschlüsse darauf zu ziehen sind, wann eine Wartung, eine Reparatur und/oder Austausch sinnvoll und/oder nötig ist, um sicherzustellen, dass es zu keinen alterungsbedingten Ausfällen der Schutzabdeckung und damit zu keinem ungeplanten Stillstand der Maschine kommt. Der Alterungszustand und/oder der Verschleiß ist bevorzugt in Form einer Zeiteinheit darstellbar, wie beispielsweise in Jahren, Monaten, Tagen, Stunden und/oder Minuten, sowie als ein relativer Wert.

Der Begriff "Vorhandensein einer Beschädigung" betrifft die Ermittlung, ob die Schutzabdeckung eine Beschädigung aufweist oder nicht. Dies ist beispielsweise denkbar, indem es zu einer signifikanten und/oder untypischen Änderung des für die charakteristische Eigenschaft bekannten und/oder definierten funktionellen Zusammenhangs, insbesondere der Funktion, kommt. Das Vorhandensein einer Beschädigung ist bevorzugt graphisch und/oder in Form eines absoluten Wertes darstellbar.

Der Begriff "Bevorstehen eines Wartungsintervalls" betrifft die Ermittlung der noch verbleibenden Zeit der Schutzabdeckung, bis diese zu warten, zu reparieren und/oder auszutauschen ist. Es lässt sich zudem beispielsweise überwachen, wie sich die Funktionalität und/oder Schutzfunktion der Schutzabdeckung über die Zeit verändert. Das Bevorstehen eines Wartungsintervalls ist bevorzugt in Form einer Zeiteinheit darstellbar, wie beispielsweise in Jahren, Monaten, Tagen, Stunden und/oder Minuten, sowie als ein relativer Wert.

Erfindungsgemäß umfasst die Schutzabdeckung mindestens ein in der Länge veränderliches Schutzabdeckungselement, einen Stützrahmen, mindestens ein Rahmenelement und/oder eine in der Länge veränderliche Sperre. Die Schutzabdeckung weist typischerweise mindestens ein in der Länge veränderliches Schutzabdeckungselement auf, um die Maschinenteile sowohl im ein- als auch im ausgefahrenen Zustand vor Fremdeinflüssen, wie beispielsweise Spänen, Staubpartikeln oder sonstigen Verschmutzungen zu schützen und zudem gegenüber der Umgebung abzudichten. Das Schutzabdeckungselement kann weiterhin mit einem Stützrahmen verbunden sein, beispielsweise lösbar oder unlösbar, welcher der Stabilisierung dieser, insbesondere der Abstützung dieser dient. Der Stützrahmen umfasst in der Regel mindestens ein, bevorzugt mehrere, Rahmenelemente, welche in der Regel im gleichmäßigen Abstand zueinander über die Länge der Schutzabdeckungselemente der Schutzabdeckung verteilt sind. Die Rahmenelemente können zudem jeweils Teil eines, insbesondere metallischen, Schutzabdeckungssegmentes sein, wobei die Schutzabdeckungssegmente beim Verfahren der Schutzabdeckung einander teleskopisch hintergreifen. Zudem kann die Schutzabdeckung eine Sperre aufweisen, welche band-oder streifenförmig ausgestaltet ist. Die Sperre ist in der Länge veränderlich und übergreift im Wesentlichen die gesamte Länge der Schutzabdeckung mit dem Schutzabdeckungselement, dem Rahmenelement und/oder dem Stützrahmen. Dabei ist die Länge der Sperre in gestrecktem Zustand der Schutzabdeckung zumindest geringfügig kleiner als die maximale Länge der Schutzabdeckung, des Schutzabdeckungselementes, des Stützrahmens und/oder der Rahmenelemente.

Es ist zudem denkbar, dass die Schutzabdeckung zusätzlich einen Endrahmen umfasst, welcher zur Befestigung der Schutzabdeckung an einer Maschine bzw. Werkzeugmaschine geeignet ist. Des Weiteren ist es denkbar, dass die Schutzabdeckung mindestens eine, bevorzugt mehrere, Führungsschienen aufweist, welche dazu ausgestaltet sind, dass mindestens ein Rahmenelement auf diesen verschiebbar gelagert ist. Es ist dabei weiterhin denkbar, dass weitere Elemente der Schutzabdeckung verschiebbar auf der Führungsschiene gelagert sind.

Es wird davon ausgegangen, dass die Definitionen und/oder die Ausführungen der oben genannten Begriffe für alle in dieser Beschreibung im Folgenden beschriebenen Aspekte gelten, sofern nichts anderes angegeben ist.

Erfindungsgemäß ist weiterhin eine Vorrichtung zur Bestimmung und/oder Uberwachung des Zustandes einer Schutzabdeckung nach Anspruch 8 vorgeschlagen.

Der Begriff "Mittel zum Erfassen" betrifft ein beliebiges, einem Fachmann aus dem Stand der Technik bekanntes Mittel, welches dazu geeignet ist, die charakteristische physikalische, mechanische und/oder chemische Eigenschaft der Schutzabdeckung zu einem Zeitpunkt zu erfassen. Bevorzugt erfolgt gleichzeitig die Erfassung des Zeitpunktes. Der Begriff "Evaluierungseinheit" betrifft eine Einheit, welche zum Vergleichen der erfassten Zustandswerte geeignet ist. Geeignete Evaluierungseinheiten sind einem Fachmann bekannt, wie beispielsweise ein Computer und/oder ein Computerprogramm. Ein Computerprogramm kann zusätzlich das Ergebnis des Vergleichs beurteilen.

Der Begriff "Auswerteeinheit" betrifft eine Einheit, welche zur Auswertung bzw. Ermittlung des Zustands der Schutzabdeckung geeignet ist. Beispielsweise ist die Auswerteeinheit ein Computer und/oder ein Computerprogramm.

Vorteilhafte Weiterbildungen der Erfindung, welche einzeln oder in Kombination realisierbar sind, sind in den Unteransprüchen dargestellt.

In einer Weiterbildung der Erfindung ist es denkbar, dass die Vorrichtung zusätzlich umfasst
e) eine Ausgabeeinheit zur Darstellung der in Schritt d) durchgeführten Ermittlung.

Der Begriff "Ausgabeeinheit" betrifft eine Einheit, welche zur Darstellung des ermittelten Zustands geeignet ist. Mittels dieser Ausgestaltung ist es möglich, den Zustand der Schutzabdeckung nummerisch und/oder graphisch darzustellen, um auf diese Weise eine Vereinfachung des Verständnisses der Ermittlung in Schritt d) zu erreichen. Einem Fachmann ist eine geeignete Ausgabeeinheit zur Darstellung bekannt.

In einer weiteren Ausgestaltung der Erfindung ist es denkbar, dass nach dem Schritt b) ein zusätzlicher Schritt b1) umfasst ist:
b1) ein Mittel zum Erfassen eines dritten Zustandswertes der mindestens einen charakteristischen Eigenschaft der Schutzabdeckung zu einem dritten Zeitpunkt, welcher dem zweiten Zeitpunkt zeitlich nachfolgend ist.

Ein derartiges Mittel zur Erfassung des dritten Zustandswertes ist dem Fachmann bekannt.

Es ist weiterhin denkbar, dass der erste Zustandswert der charakteristischen Eigenschaft ein Referenzwert ist.

In einer Weiterbildung der vorliegenden Erfindung ist es denkbar, dass das Mittel, die Evaluierungseinheit, die Auswerteeinheit und/oder die Ausgabeeinheit teilweise oder vollständig in der Schutzabdeckung integrierbar ist. Auf diese Weise ist eine bestmögliche Bestimmung und/oder Überwachung des Zustandes der Schutzabdeckung realisierbar. In einer alternativen Weiterbildung ist es denkbar, dass das Mittel, die Evaluierungseinheit, die Auswerteeinheit und/oder die Ausgabeeinheit extern der Schutzabdeckung anordenbar und berührungslos oder berührend ausstattbar ist. Auf diese Weise ist eine bestmögliche Bestimmung und/oder Überwachung des Zustandes der Schutzabdeckung realisierbar. In noch einer Ausgestaltung der Erfindung ist es denkbar, dass das Mittel ein Zählwerk, ein Betriebszeitzähler, ein Indikator, ein Sensor und/oder eine Sensorik ist. Beispiele derartiger Mittel sind einem Fachmann bekannt. So zeichnet sich ein "Indikator" beispielsweise dadurch aus, dass dieser bei Überschreiten bzw. Unterschreiten eines vordefinierten Grenzwertes, beispielsweise einer Menge an UV-Licht, die Farbe wechselt. Der Begriff "Sensor" betrifft ein dem Fachmann bekanntes technisches Bauteil, welches bestimmte physikalische, mechanische und/oder chemische Eigenschaften erfassen kann. Der Begriff "Sensorik" bezeichnet die Anwendung von Sensoren zur Messung und/oder Kontrolle von Veränderungen von umweltbezogenen, biologischen und/oder technischen Systemen.

In einer alternativen Ausgestaltung der Erfindung ist es denkbar, dass der Sensor ein Nanosensor und/oder Mikrosensor ist. Ein Nanosensor und ein Mikrosensor sind einem Fachmann bekannt.

Erfindungsgemäß erfassen die charakteristischen Eigenschaften die Lichtdurchlässigkeit, die Lichtabsorption, die Lichtreflexion, die Viskosität, die Beschleunigung, die Geschwindigkeit, die Elastizität, die Steifigkeit, die Temperatur, der Feuchtigkeitsgehalt, die elektrische Leitfähigkeit, die Druckkraft, die Druckbelastung, die Zugbelastung, die Vorspannkraft, die Porosität, das Gewicht, die Brüchigkeit, die Dicke und/oder die Dichte.

Die Lichtdurchlässigkeit ist beispielsweise indirekt durch Lochbildung im Material mittels einer Kamera, einem CCD-Sensor, einer Fotodiode und/oder einer Fotozelle erfassbar. Zudem ist es beispielsweise möglich, aus der Änderung des elektrischen Widerstands eines elektrisch leitenden Materials auf eine Lochbildung in demselben Material zu schließen bzw. dieselbe zu lokalisieren.

Die Beschleunigung ist beispielsweise mit einem Beschleunigungssensor, einem Gyroskop und/oder einem hochauflösenden Kamerasystem erfassbar.

Die Temperatur, insbesondere die Temperaturdifferenz, ist beispielsweise mittels eines thermoelektrischen Sensors, d.h. einem Thermoelement mit oder ohne Verstärker, einem Thermometer und/oder einem Indikator erfassbar.

Die Druckbelastung spiegelt beispielsweise wider, wie oft und/oder wie lange die Schutzabdeckung zusammengedrückt wurde bzw. wie hoch die minimale und/oder maximale Druckbelastung dabei war. Die Druckbelastung ist beispielsweise mittels eines Drucksensors, einer Federwaage, einer Hebewaage und/oder einem Manometer erfassbar.

Die Zugbelastung der Schutzabdeckung ist beispielsweise mittels eines Dehnungshebels und/oder eines Dehnungsmessstreifens erfassbar.

Die Vorspannkraft ist beispielsweise mittels eines Drucksensors und/oder eines hochauflösenden Kamerasystems erfassbar.

Die Brüchigkeit, Porosität und/oder Dichte ist beispielsweise mittels Röntgenstrahlen, Ultraschall und/oder Bestrahlung mit schwacher Gammastrahlung, beispielsweise der Isotope-Methode, erfassbar. Zudem ist die Dicke mit einer Messeinheit, wie einem Metermaß, erfassbar.

Es ist weiterhin denkbar, dass der Zustand der Schutzabdeckung ausgewählt ist aus der Liste aus der restlichen Nutzungsdauer, dem Alterungszustand, dem Verschleiß, dem Vorhandensein einer Beschädigung und/oder dem Bevorstehen eines Wartungsintervalls.

In noch einer Weiterbildung ist es denkbar, dass die Schutzabdeckung mindestens ein in der Länge veränderliches Schutzabdeckungselement, einen Stützrahmen, mindestens ein Rahmenelement und/oder eine in der Länge veränderliche Sperre umfasst.

Es ist zudem denkbar, dass die Schutzabdeckung zusätzlich einen Endrahmen umfasst, welcher zur Befestigung der Schutzabdeckung an einer Maschine bzw. Werkzeugmaschine geeignet ist. Des Weiteren ist es denkbar, dass die Schutzabdeckung mindestens eine, bevorzugt mehrere, Führungsschienen aufweist, welche dazu ausgestaltet sind, dass mindestens ein Rahmenelement auf diesen verschiebbar gelagert ist. Es ist dabei weiterhin denkbar, dass weitere Elemente der Schutzabdeckung verschiebbar auf der Führungsschiene gelagert sind.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktion einander entsprechende Elemente.

Im Einzelnen zeigen:
- Fig. 1: eine isometrische Darstellung einer erfindungsgemäßen Vorrichtung und Schutzabdeckung zur Bestimmung und/oder Überwachung des Zustandes dieser;
- Fig. 2: eine alternative isometrische Darstellung einer erfindungsgemäßen Vorrichtung und Schutzabdeckung;
- Fig. 3: eine weitere alternative isometrische Darstellung einer erfindungsgemäßen Vorrichtung und Schutzabdeckung;
- Fig. 4: eine isometrische Darstellung einer erfindungsgemäßen Vorrichtung und Schutzabdeckung nebst zu schützender Werkzeugmaschine.

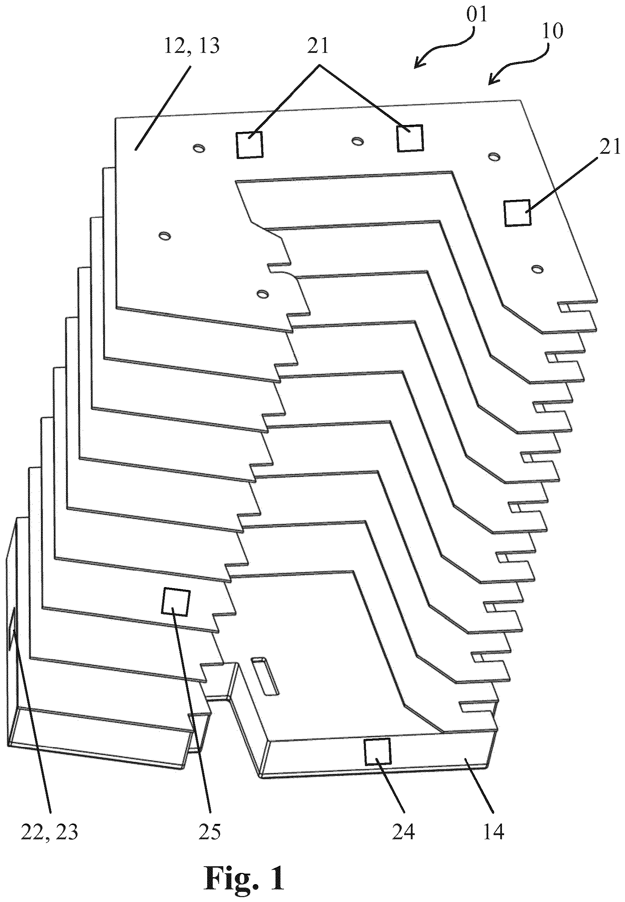

In der **Fig. 1** ist in isometrischer Darstellung eine erfindungsgemäße Vorrichtung 01 zur Bestimmung und/oder Überwachung des Zustandes einer Schutzabdeckung 10, 12, 13, 14 dargestellt. Wie der Fig. 1 zu entnehmen ist, weist die erfindungsgemäße Vorrichtung 01 an einem Stützrahmen 12, welcher in der Regel mehrere Rahmenelemente 13 umfasst, mehrere Sensoren 21, 25 auf, wie drei Drucksensoren 21 und einen Vibrationssensor 25. Am Endrahmen 14 befindet sich ein Beschleunigungssensor 24, sowie ein Temperatur- und/oder Luftfeuchtigkeitssensor 22, 23.

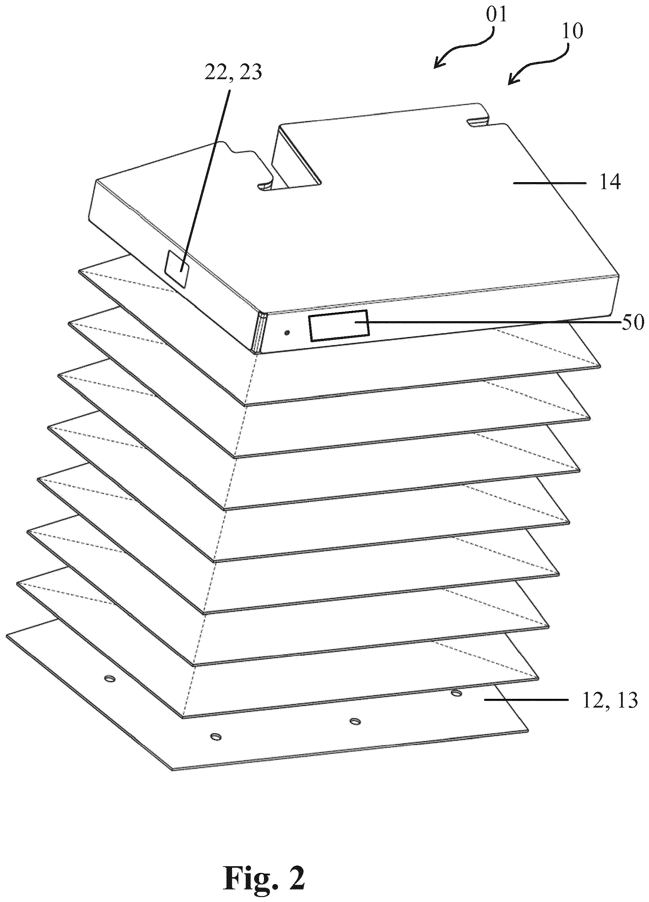

In der Fig. 2 ist eine alternative isometrische Darstellung einer erfindungsgemäßen Vorrichtung 01 zur Bestimmung und/oder Überwachung des Zustandes einer Schutzabdeckung 10, 12, 13, 14 dargestellt. Wie der Fig. 2 zu entnehmen ist, weist auch diese Schutzabdeckung 10, 12, 13, 14 einen Stützrahmen 12 auf, welche mehrere Rahmenelemente 13 umfasst. Am Endrahmen 14 befindet sich ein Temperatur- und/oder Luftfeuchtigkeitssensor 22, 23, sowie eine Ausgabeeinheit 50.

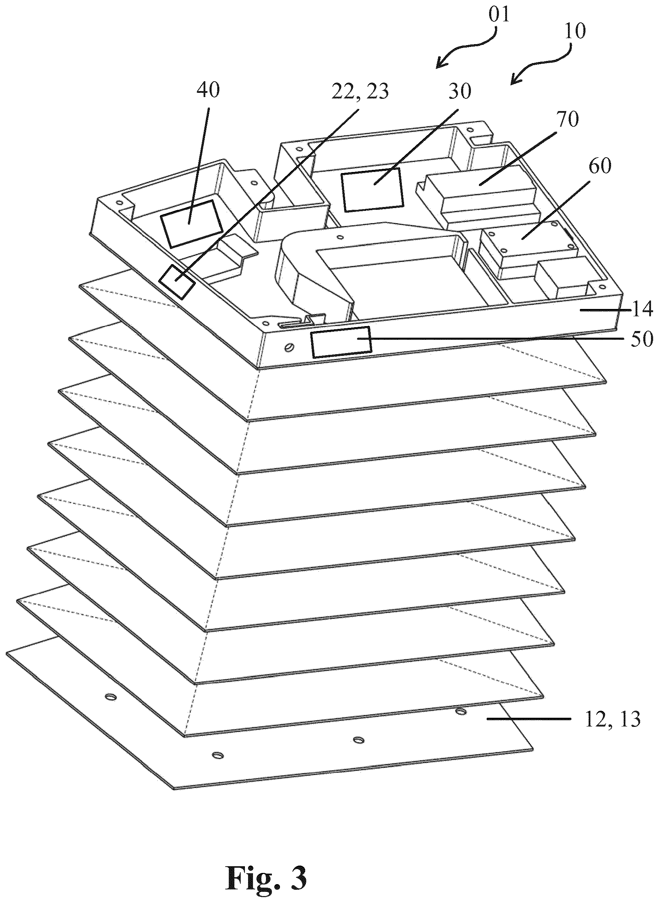

In der Fig. 3 ist eine weitere alternative isometrische Darstellung einer erfindungsgemäßen Vorrichtung 01 zur Bestimmung und/oder Überwachung des Zustandes einer Schutzabdeckung 10, 12, 13, 14 gezeigt. Die Fig. 3 entspricht dabei im Wesentlichen der Fig. 2, mit der Ausnahme, dass der Endrahmen 14 in geöffnetem Zustand dargestellt ist, um einen Einblick in den Bauraum für die diversen Sensor- und/oder Sensorickomponenten zu zeigen.

So ist es der Fig. 3 zu entnehmen, dass der Endrahmen 14 an der Außenseite einen Temperatur- und/oder Luftfeuchtigkeitssensor 22, 23 sowie eine Ausgabeeinheit 50 aufweist, wie ebenfalls in Fig. 2 dargestellt. Des Weiteren ist es der Fig. 3 zu entnehmen, dass im Inneren des Endrahmens 14 eine Evaluierungseinheit 30, eine Auswerteeinheit 40, eine kabelgebundene und/oder kabellose Stromversorgung, wie beispielsweise ein Akku 60, sowie eine Sende- und/oder Empfangseinheit 70 für eine kabelgebundene und/oder kabellose Datenübertragung angeordnet sind. Verständlicherweise ist es auch denkbar, dass die Evaluierungs- und/oder Auswerteeinheit 30, 40 in einem Bauteil anordenbar sind. Zudem ist in der Fig. 3 ein Stützrahmen 12 gezeigt, welcher mehrere Rahmenelemente 13 umfasst.

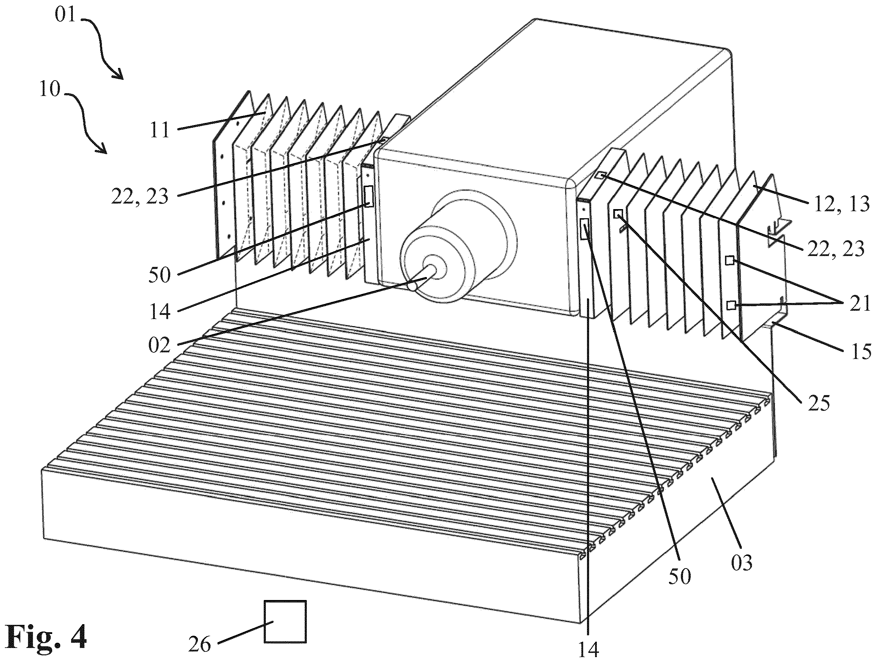

In der **Fig. 4** ist eine isometrische Darstellung einer erfindungsgemäßen Vorrichtung 01 zur Bestimmung und/oder Überwachung des Zustandes einer Schutzabdeckung 10, 11, 12, 13, 14, 15 gezeigt, welche der Abdeckung von beweglichen Maschinenteilen oder dergleichen dient. Zudem ist in der Fig. 4 ein Werkzeug 02 und ein Tisch 03 dargestellt.

Wie der Fig. 4 deutlich zu entnehmen ist, umfasst die Schutzabdeckung 10, 11, 12, 13, 14, 15 einen Stützrahmen 12, welcher weiterhin mehrere Rahmenelemente 13 umfasst. Zudem weist die Schutzabdeckung 10, 11, 12, 13, 14, 15 ein in der Länge veränderliches Schutzabdeckungselement 11 auf, um die Maschinenteile sowohl im ein- als auch im ausgefahrenen Zustand vor Fremdeinflüssen zu schützen und zudem gegenüber der Umgebung abzudichten. Es ist des Weiteren ersichtlich, dass die Rahmenelemente 13 auf einer Führungsschiene 15 verschiebbar gelagert sind. Der Endrahmen 14 dient, wie der Fig. 4 zu entnehmen ist, der Befestigung der Schutzabdeckung 10, 11, 12, 13, 14, 15 an der Werkzeugmaschine.

Die erfindungsgemäße Vorrichtung 01 weist dabei mehrere Mittel 21, 22, 23, 24, 25, 26 zur Bestimmung und/oder Überwachung des Zustandes der Schutzabdeckung 10, 11, 12, 13, 14, 15 auf. So ist es der Fig. 4 zu entnehmen, dass an dem Endrahmen 14 ein Temperatur- und/oder Luftfeuchtigkeitssensor 22, 23, sowie eine Ausgabeeinheit 50 angeordnet sind. Es ist des Weiteren erkennbar, dass am Stützrahmen 12 und/oder einem Rahmenelement 13 zwei Drucksensoren 21, sowie ein Vibrationssensor 25 angeordnet sind. Es ist weiterhin zu erkennen, dass ein weiteres Mittel 26, insbesondere eine Kamera 26, extern der erfindungsgemäßen Vorrichtung 01 angeordnet ist.

## Patentansprüche

1. Verfahren zur Bestimmung und/oder Überwachung des Zustandes einer Schutzabdeckung (10, 11, 12, 13), wobei die Schutzabdeckung (10, 11, 12, 13) mindestens ein in der Länge veränderliches Schutzabdeckungselement (11), einen Stützrahmen (12), mindestens ein Rahmenelement (13) und/oder eine in der Länge veränderliche Sperre umfasst, umfassend
a) Erfassen eines ersten Zustandswertes mindestens zweier charakteristischer physikalischer, mechanischer und/oder chemischer Eigenschaften der Schutzabdeckung (10, 11, 12, 13) zu einem ersten Zeitpunkt, wobei die zwei charakteristischen Eigenschaften die Lichtdurchlässigkeit, die Lichtabsorption, die Lichtreflexion, die Viskosität, die Beschleunigung, die Geschwindigkeit, die Elastizität, die Steifigkeit, die Temperatur, den Feuchtigkeitsgehalt, die elektrische Leitfähigkeit, die Druckkraft, die Druckbelastung, die Zugbelastung, die Vorspannkraft, die Porosität, das Gewicht, die Brüchigkeit, die Dicke und/oder die Dichte sind; und
b) Erfassen eines zweiten Zustandswertes der mindestens zwei charakteristischen Eigenschaften der Schutzabdeckung (10, 11, 12, 13) zu einem zweiten Zeitpunkt, welcher dem ersten Zeitpunkt zeitlich nachfolgend ist; und
c) Vergleichen der erfassten Zustandswerte; und
d) Ermitteln des Zustandes der Schutzabdeckung (10, 11, 12, 13) basierend auf dem in Schritt c) durchgeführten Vergleich.

2. Verfahren nach Anspruch 1, wobei das Verfahren zusätzlich umfasst
e) Darstellen der in Schritt d) durchgeführten Ermittlung.

3. Verfahren nach einem der vorhergehenden Ansprüche, wobei nach dem Schritt b) ein zusätzlicher Schritt b1) umfasst ist:
b1) Erfassen eines dritten Zustandswertes der mindestens zwei charakteristischen Eigenschaften der Schutzabdeckung (10, 11, 12, 13) zu einem dritten Zeitpunkt, welcher dem zweiten Zeitpunkt zeitlich nachfolgend ist.

4. Verfahren nach einem der vorhergehenden Ansprüche, wobei der erste Zustandswert der jeweiligen charakteristischen Eigenschaften ein Referenzwert ist.

5. Verfahren nach einem der Ansprüche 1 bis 4, wobei der erste, der zweite und/oder der dritte Zustandswert bei im Wesentlichen ähnlichen Bedingungen erfasst wird.

6. Verfahren nach einem der Ansprüche 1 bis 4, wobei der erste, der zweite und/oder der dritte Zustandswert bei unterschiedlichen Bedingungen erfasst wird.

7. Verfahren nach einem der vorhergehenden Ansprüche, wobei der Zustand der Schutzabdeckung (10, 11, 12, 13) ausgewählt ist aus der Liste aus der restlichen Nutzungsdauer, dem Alterungszustand, dem Verschleiß, dem Vorhandensein einer Beschädigung und/oder dem Bevorstehen eines Wartungsintervalls.

8. Vorrichtung (01) zur Bestimmung und/oder Überwachung des Zustandes einer Schutzabdeckung (10, 11, 12, 13), wobei die Schutzabdeckung (10, 11, 12, 13) mindestens ein in der Länge veränderliches Schutzabdeckungselement (11), einen Stützrahmen (12), mindestens ein Rahmenelement (13) und/oder eine in der Länge veränderliche Sperre umfasst, umfassend
a) mindestens ein Mittel (21, 22, 23, 24, 25, 26) zum Erfassen eines ersten Zustandswertes mindestens zweier charakteristischer physikalischer, mechanischer und/oder chemischer Eigenschaften der Schutzabdeckung (10, 11, 12, 13) zu einem ersten Zeitpunkt, wobei das Mittel (21, 22, 23, 24, 25, 26) die Lichtdurchlässigkeit, die Lichtabsorption, die Lichtreflexion, die Viskosität, die Beschleunigung, die Geschwindigkeit, die Elastizität, die Steifigkeit, die Temperatur, den Feuchtigkeitsgehalt, die elektrische Leitfähigkeit, die Drucckraft, die Druckbelastung, die Zugbelastung, die Vorspannkraft, die Porosität, das Gewicht, die Brüchigkeit, die Dicke und/oder die Dichte erfasst; und
b) mindestens ein Mittel (21, 22, 23, 24, 25, 26) zum Erfassen eines zweiten Zustandswertes der mindestens zwei charakteristischen Eigenschaften der Schutzabdeckung (10, 11, 12, 13) zu einem zweiten Zeitpunkt, welcher dem ersten Zeitpunkt zeitlich nachfolgend ist; und
c) eine Evaluierungseinheit (30) zum Vergleichen der erfassten Zustandswerte; und
d) eine Auswerteeinheit (40) zur Ermittlung des Zustandes der Schutzabdeckung (10, 11, 12, 13) basierend auf dem in Schritt c) durchgeführten Vergleich.

9. Vorrichtung (01) nach Anspruch 8, wobei die Vorrichtung (01) zusätzlich umfasst
e) eine Ausgabeeinheit (50) zur Darstellung der in Schritt d) durchgeführten Ermittlung.

10. Vorrichtung (01) nach einem der vorhergehenden Ansprüche, wobei die Vorrichtung (01) mindestens ein Mittel (21, 22, 23, 24, 25, 26) zum Erfassen eines dritten Zustandswertes der mindestens zwei charakteristischen Eigenschaften der Schutzabdeckung (10, 11, 12, 13) zu einem dritten Zeitpunkt, welcher dem zweiten Zeitpunkt zeitlich nachfolgend ist, umfasst.

11. Vorrichtung (01) nach einem der vorhergehenden Ansprüche, wobei der erste Zustandswert der jeweiligen charakteristischen Eigenschaften ein Referenzwert ist.

12. Vorrichtung (01) nach einem der Ansprüche 8 bis 11, wobei das Mittel (21, 22, 23, 24, 25, 26), die Evaluierungseinheit (30), die Auswerteeinheit (40) und/oder die Ausgabeeinheit (50) teilweise oder vollständig in der Schutzabdeckung (10, 11, 12, 13) integrierbar ist.

13. Vorrichtung (01) nach einem der Ansprüche 8 bis 11, wobei das Mittel (21, 22, 23, 24, 25, 26), die Evaluierungseinheit (30), die Auswerteeinheit (40) und/oder die Ausgabeeinheit (50) extern der Schutzabdeckung (10, 11, 12, 13) anordenbar und berührungslos oder berührend ausstattbar ist.

14. Vorrichtung (01) nach einem der vorhergehenden Ansprüche, wobei das Mittel (21, 22, 23, 24, 25, 26) ein Zählwerk, eine Kamera (26), ein Betriebszeitzähler, ein Indikator, ein Sensor (21, 22, 23, 24, 25) und/oder eine Sensorik ist.

15. Vorrichtung (01) nach Anspruch 14, wobei der Sensor (21, 22, 23, 24, 25) ein Nanosensor und/oder ein Mikrosensor ist.

16. Vorrichtung (01) nach einem der vorhergehenden Ansprüche, wobei der Zustand der Schutzabdeckung (10, 11, 12, 13) ausgewählt ist aus der Liste aus der restlichen Nutzungsdauer, dem Alterungszustand, dem Verschleiß, dem Vorhandensein einer Beschädigung und/oder dem Bevorstehen eines Wartungsintervalls.

## Claims

1. A method for determining and/or monitoring the state of a protective cover (10, 11, 12, 13), wherein the protective cover (10, 11, 12, 13) comprises at least one length-adjustable protective cover element (11), a support frame (12), at least one frame element (13) and/or a length-adjustable restraining element, the method comprising the steps of
a) obtaining a first state value of at least two characteristic physical, mechanical and/or chemical properties of the protective cover (10, 11, 12, 13) at a first point in time, wherein the two characteristic properties are translucence, light absorption, light reflection, viscosity, acceleration, speed, elasticity, stiffness, temperature, moisture content, electrical conductivity, pressure force, compressive load, tensile load, pre-load, porosity, weight, brittleness, thickness and/or density; and
b) obtaining a second state value of the at least two characteristic properties of the protective cover (10, 11, 12, 13) at a second point in time, which is subsequent to the first point in time; and
c) comparing the obtained state values; and
d) determining the state of the protective cover (10, 11, 12, 13) based on the comparison performed in step c).

2. The method according to claim 1, wherein the method additionally comprises a step of
e) displaying the determination performed in step d).

3. The method according to any one of the preceding claims, wherein the method comprises an additional step b1) after step b):
b1) obtaining a third state value of the at least two characteristic properties of the protective cover (10, 11, 12, 13) at a third point in time, which is subsequent to the second point in time.

4. The method according to any one of the preceding claims, wherein the first state value of the respective characteristic properties is a reference value.

5. The method according to any one of claims 1 to 4, wherein the first, the second and/or the third state value are obtained under substantially similar conditions.

6. The method according to any one of claims 1 to 4, wherein the first, the second and/or the third state value are obtained under different conditions.

7. The method according to any one of the preceding claims, wherein the state of the protective cover (10, 11, 12, 13) is selected from the list of remaining useful life, state of health, wear, existence of damage and/or imminence of a maintenance interval.

8. A device (01) for determining and/or monitoring the state of a protective cover (10, 11, 12, 13), wherein the protective cover (10, 11, 12, 13) comprises at least one length-adjustable protective cover element (11), a support frame (12), at least one frame element (13) and/or a length-adjustable restraining element, the device (01) comprising
a) at least one means (21, 22, 23, 24, 25, 26) for obtaining a first state value of at least two characteristic physical, mechanical and/or chemical properties of the protective cover (10, 11, 12, 13) at a first point in time, wherein the means (21, 22, 23, 24, 25, 26) registers translucence, light absorption, light reflection, viscosity, acceleration, speed, elasticity, stiffness, temperature, moisture content, electrical conductivity, pressure force, compressive load, tensile load, pre-load, porosity, weight, brittleness, thickness and/or density; and
b) at least one means (21, 22, 23, 24, 25, 26) for obtaining a second state value of the at least two characteristic properties of the protective cover (10, 11, 12, 13) at a second point in time, which is subsequent to the first point in time; and
c) an evaluation unit (30) for comparing the obtained state values; and
d) an analysis unit (40) for determining the state of the protective cover (10, 11, 12, 13) based on the comparison performed in item c).

9. The device (01) according to claim 8, wherein the device (01) additionally comprises
e) an output unit (50) for displaying the determination performed in item d).

10. The device (01) according to any one of the preceding claims,
wherein the device (01) comprises at least one means (21, 22, 23, 24, 25, 26) for obtaining a third state value of the at least two characteristic properties of the protective cover (10, 11, 12, 13) at a third point in time, which is subsequent to the second point in time.

11. The device (01) according to any one of the preceding claims,
wherein the first state value of the respective characteristic properties is a reference value.

12. The device (01) according to any one of claims 8 to 11, wherein the means (21, 22, 23, 24, 25, 26), the evaluation unit (30), the analysis unit (40) and/or the output unit (50) are partially or fully integrated in the protective cover (10, 11, 12, 13).

13. The device (01) according to any one of claims 8 to 11, wherein the means (21, 22, 23, 24, 25, 26), the evaluation unit (30), the analysis unit (40) and/or the output unit (50) are disposed outside the protective cover (10, 11, 12, 13) and are rigged for non-contact or contact action.

14. The device (01) according to any one of the preceding claims,
wherein the means (21, 22, 23, 24, 25, 26) is a counting mechanism, a camera (26), an operating time counter, an indicator, a sensor (21, 22, 23, 24, 25) and/or a sensor system.

15. The device (01) according to claim 14, wherein the sensor (21, 22, 23, 24, 25) is a nanosensor and/or a microsensor.

16. The device (01) according to any one of the preceding claims,
wherein the state of the protective cover (10, 11, 12, 13) is selected from the list of remaining useful life, state of health, wear, existence of damage and/or imminence of a maintenance interval.

## Revendications

1. Procédé pour déterminer et/ou pour surveiller l'état d'un couvercle de protection (10, 11, 12, 13), dans lequel le couvercle de protection (10, 11, 12, 13) comprend au moins un élément de couvercle de protection (11) ajustable en sa longueur, un cadre de support (12), au moins un élément de cadre (13) et/ou un élément de retenue ajustable en sa longueur, le procédé comprenant les étapes suivantes
a) obtenir une première valeur d'état d'au moins deux propriétés caractéristiques physiques, mécaniques et/ou chimiques du couvercle de protection (10, 11, 12, 13) à un premier point dans le temps, dans lequel les deux propriétés caractéristiques sont la translucidité, l'absorption de lumière, la réflexion de lumière, la viscosité, l'accélération, la vitesse, l'élasticité, la rigidité, la température, la teneur en humidité, la conductivité électrique, la pression, la charge de compression, la charge de traction, la force de précharge, la porosité, le poids, la fragilité, l'épaisseur et/ou la densité ; et
b) obtenir une deuxième valeur d'état desdites au moins deux propriétés caractéristiques du couvercle de protection (10, 11, 12, 13) à un deuxième point dans le temps, qui suit le premier point dans le temps ; et
c) comparer les valeurs d'état obtenues ; et
d) déterminer l'état du couvercle de protection (10, 11, 12, 13) basé sur la comparaison exécutée dans l'étape c).

2. Procédé selon la revendication 1, dans lequel le procédé comprend une étape supplémentaire :
e) afficher la détermination exécutée dans l'étape d).

3. Procédé selon l'une quelconque des revendications précédentes, dans lequel le procédé comprend une étape supplémentaire b1) suivant l'étape b) :
b1) obtenir une troisième valeur d'état desdites au moins deux propriétés caractéristiques du couvercle de protection (10, 11, 12, 13) à un troisième point dans le temps, qui suit le deuxième point dans le temps.

4. Procédé selon l'une quelconque des revendications précédentes, dans lequel la première valeur d'état des propriétés caractéristiques respectives est une valeur de référence.

5. Procédé selon l'une quelconque des revendications 1 à 4, dans lequel la première, la deuxième et/ou la troisième valeur d'état sont obtenues dans des conditions en principe similaires.

6. Procédé selon l'une quelconque des revendications 1 à 4, dans lequel la première, la deuxième et/ou la troisième valeur d'état sont obtenues dans des conditions différentes.

7. Procédé selon l'une quelconque des revendications précédentes, dans lequel l'état du couvercle de protection (10, 11, 12, 13) est choisi dans la liste indiquant la vie utile résiduelle, l'état de vieillissement, l'usure, l'existence de dommage et/ou l'imminence d'un intervalle de maintenance.

8. Dispositif (01) pour déterminer et/ou pour surveiller l'état d'un couvercle de protection (10, 11, 12, 13), dans lequel le couvercle de protection (10, 11, 12, 13) comprend au moins un élément de couvercle de protection (11) ajustable en sa longueur, un cadre de support (12), au moins un élément de cadre (13) et/ou un élément de retenue ajustable en sa longueur, le dispositif (01) comprenant
a) au moins un moyen (21, 22, 23, 24, 25, 26) pour obtenir une première valeur d'état ayant au moins deux propriétés caractéristiques physiques, mécaniques et/ou chimiques du couvercle de protection (10, 11, 12, 13) à un premier point dans le temps, dans lequel le moyen (21, 22, 23, 24, 25, 26) enregistre la translucidité, l'absorption de lumière, la réflexion de lumière, la viscosité, l'accélération, la vitesse, l'élasticité, la rigidité, la température, la teneur en humidité, la conductivité électrique, la pression, la charge de compression, la charge de traction, la force de précharge, la porosité, le poids, la fragilité, l'épaisseur et/ou la densité ; et
b) au moins un moyen (21, 22, 23, 24, 25, 26) pour obtenir une deuxième valeur d'état desdites au moins deux propriétés caractéristiques du couvercle de protection (10, 11, 12, 13) à un deuxième point dans le temps, qui suit le premier point dans le temps ; et
c) une unité d'évaluation (30) pour comparer les valeurs d'état obtenues ; et
d) une unité d'analyse (40) pour déterminer l'état du couvercle de protection (10, 11, 12, 13) basé sur la comparaison exécutée dans l'étape c).

9. Dispositif (01) selon la revendication 8, dans lequel le dispositif (01) comprend de plus
e) une unité de sortie (50) pour afficher la détermination exécutée dans l'étape d).

10. Dispositif (01) selon l'une quelconque des revendications précédentes, dans lequel le dispositif (01) comprend au moins un moyen (21, 22, 23, 24, 25, 26) pour obtenir une troisième valeur d'état desdites au moins deux propriétés caractéristiques du couvercle de protection (10, 11, 12, 13) à un troisième point dans le temps, qui suit le deuxième point dans le temps.

11. Dispositif (01) selon l'une quelconque des revendications précédentes, dans lequel la première valeur d'état des propriétés caractéristiques respectives est une valeur de référence.

12. Dispositif (01) selon l'une quelconque des revendications 8 à 11, dans lequel le moyen (21, 22, 23, 24, 25, 26), l'unité d'évaluation (30), l'unité d'analyse (40) et/ou l'unité de sortie (50) sont intégrées en partie ou complètement dans le couvercle de protection (10, 11, 12, 13).

13. Dispositif (01) selon l'une quelconque des revendications 8 à 11, dans lequel le moyen (21, 22, 23, 24, 25, 26), l'unité d'évaluation (30), l'unité d'analyse (40) et/ou l'unité de sortie (50) sont disposées en dehors du couvercle de protection (10, 11, 12, 13) et sont équipées pour fonctionner sans contact ou en se touchant.

14. Dispositif (01) selon l'une quelconque des revendications précédentes, dans lequel le moyen (21, 22, 23, 24, 25, 26) est un compteur, une caméra (26), un compteur de temps de production, un indicateur, un capteur (21, 22, 23, 24, 25) et/ou un système de capteurs.

15. Dispositif (01) selon la revendication 14, dans lequel le capteur (21, 22, 23, 24, 25) est un nano-capteur et/ou un microcapteur.

16. Dispositif (01) selon l'une quelconque des revendications précédentes, dans lequel l'état du couvercle de protection (10, 11, 12, 13) est choisi dans la liste indiquant la vie utile résiduelle, l'état de vieillissement, l'usure, l'existence de dommage et/ou l'imminence d'un intervalle de maintenance.
